# FASCICULE DE BREVET EUROPEEN

(11) **EP 3 655 692 B1**
(45) Date de publication et mention de la délivrance du brevet: **02.06.2021**
(21) Numéro de dépôt: 18737275.0
(22) Date de dépôt: 09.07.2018
(51) Int. Cl.: F16P 3/08

(54) **INSTALLATION DE MANUTENTION D'ARTICLES À MAINTENANCE SÉCURISÉE**
ANLAGE ZUR HANDHABUNG VON GEGENSTÄNDEN MIT SICHERER WARTUNG
FACILITY FOR HANDLING ARTICLES WITH SECURE MAINTENANCE

(30) Priorité: 21.07.2017 FR 1756931
(43) Date de publication de la demande: 27.05.2020
(73) Titulaire: Sidel Participations, 76930 Octeville-sur-Mer (FR)
(72) Inventeur: SANTAIS, Franck, 76930 Octeville-sur-mer (FR); PETIT, Fabian, 76930 Octeville-sur-mer (FR)
(74) Mandataire: Sidel Group
(86) Numéro de dépôt international: PCT/EP2018/068507
(87) Numéro de publication internationale: WO 2019/016008

(56) Documents cités:
- FR-A1- 2 938 508
- FR-A1- 2 940 964
- FR-A1- 2 990 638

## Description

L'invention a trait au domaine de la manutention d'articles ; elle concerne, plus précisément, une installation de manutention d'articles.

Bien que l'invention ne soit pas limitée à ce domaine, elle peut s'appliquer à la manutention des corps creux, tels que des préformes (ou ébauches) de récipients, ou encore des récipients, notamment en matière plastique, typiquement en PET.

Un récipient en matière plastique est classiquement fabriqué par formage à partir d'une ébauche (ou d'une préforme), au sein d'une installation qui comprend plusieurs unités de traitement, typiquement :
- une unité de traitement thermique, dans laquelle l'ébauche (ou la préforme) est chauffée à une température supérieure à la température de transition vitreuse de la matière (laquelle est d'environ 80°C dans le cas du PET),
- une unité de formage, qui comprend au moins un moule à l'empreinte du modèle de récipient à former et dans laquelle un fluide sous pression est injecté dans l'ébauche pour la conformer selon cette empreinte,
- une unité de remplissage, dans laquelle le récipient préalablement formé est rempli (par ex. d'un liquide, d'une pâte, ou encore d'une poudre),
- une unité de bouchage, dans laquelle le récipient rempli est fermé au moyen d'un bouchon,
- une unité d'étiquetage, dans laquelle le récipient rempli et bouché est revêtu d'une étiquette.

Schématiquement, chaque unité de traitement peut être vue comme un convoyeur (par ex., dans le cas d'une l'unité de formage, du type rotatif) associé à une fonction (par ex., toujours dans le cas d'une l'unité de formage, l'injection de fluide sous pression dans l'ébauche ou la préforme).

Pour entraîner ce convoyeur dans un mouvement cyclique, l'installation comprend une motorisation qui lui est accouplée, ainsi qu'une unité électronique (ou informatique) de contrôle qui pilote cette motorisation.

Entre ces différentes unités de traitement, les corps creux (préformes, ébauches, récipients) sont généralement pris en charge par des dispositifs de transfert, notamment des roues, pourvues, sur leur périphérie, de pinces qui viennent s'encliqueter sur les corps creux et assurent leur déplacement d'un point de charge jusqu'à un point de décharge.

Une telle installation comprend généralement un bâti abritant les unités de traitement, ainsi que les différents dispositifs de transfert. Ce bâti comprend des portes qui permettent à des opérateurs d'accéder à des zones de maintenance dans lesquelles les opérateurs peuvent réaliser diverses opérations sur les unités de traitement (notamment sur les convoyeurs) et sur les dispositifs de transfert. Le document FR2940964 divulgue une installation de manutention d'articles similaire.

En pratique, ce bâti comprend plusieurs portes donnant accès à différentes zones des maintenance distinctes autour d'une même unité de traitement (c'est-à-dire autour d'un même convoyeur).

Lorsqu'est détecté un incident sur une unité de traitement (par ex. un défaut de fermeture d'un moule dans une unité de formage), l'unité de contrôle commande l'arrêt du convoyeur et génère un signal d'alerte à l'intention d'un opérateur.

Un (premier) opérateur se rend alors dans la zone de maintenance par la porte qui y donne accès. De nombreuses opérations de maintenance nécessitent que l'opérateur commande manuellement le déplacement du convoyeur. Ainsi, sur une unité de formage dont un moule est en défaut de fermeture, ce moule n'est pas nécessairement accessible depuis la zone de maintenance, et l'opérateur doit par conséquent commander lui-même le déplacement du convoyeur pour amener le moule dans la zone de maintenance d'où il pourra effectuer l'opération de maintenance.

Le déplacement est typiquement commandé au moyen d'un levier d'actionnement (par ex. une clé à cliquet) en prise avec un organe d'entraînement (par ex. une poulie couplée au convoyeur).

Cependant il arrive que, profitant de l'arrêt du convoyeur, un deuxième opérateur accède à une autre zone de maintenance pour y effectuer une autre opération, sans en avoir averti le premier opérateur. Dans ce cas, tout mouvement du convoyeur commandé par le premier opérateur est effectué à l'insu du deuxième opérateur, qui peut subir un choc avec un élément mobile du convoyeur, éventuellement jusqu'à être blessé.

Certes, il se peut que le deuxième opérateur réalise une opération de maintenance sur une autre unité de traitement (ou un dispositif de transfert), mais cela ne le met pas nécessairement à l'abri des chocs et des blessures, car cette autre unité de traitement (ou ce dispositif de transfert) peut être asservi(e) et synchronisé(e) au convoyeur sur lequel intervient le premier opérateur, de sorte que tout mouvement du convoyeur commandé par le premier opérateur se traduit par un mouvement synchrone de l'autre unité de traitement (ou du dispositif de transfert).

On voit donc qu'il existe un besoin de sécuriser les opérations de maintenance (ou, à tout le moins, d'améliorer la sécurité de ces opérations) sur les installations de manutention d'articles.

A cet effet, il est proposé, en premier lieu, une installation de manutention d'articles, qui comprend :
- Un convoyeur ;
- Une motorisation couplée au convoyeur pour entraîner celui-ci dans un mouvement cyclique ;
- Un frein pouvant adopter une position serrée dans laquelle il bloque le mouvement du convoyeur et une position desserrée dans laquelle il libère le mouvement du convoyeur ;
- Un actionneur manuel de sécurité, apte à adopter une position inactive dans laquelle il commande le desserrage du frein et une position active dans laquelle il permet son serrage ;
- Un organe d'entraînement manuel du convoyeur ;
- Un bâti abritant le convoyeur, ce bâti comprenant :
   o une porte principale d'accès à une zone principale de maintenance dans laquelle se trouve l'organe d'entraînement manuel,
   o une porte annexe d'accès à une zone annexe de maintenance distincte de la zone principale de maintenance, cette porte annexe pouvant adopter une position fermée dans laquelle elle bloque l'accès à la zone annexe de maintenance, et une position ouverte dans laquelle elle donne accès à la zone annexe de maintenance,
   o une serrure ayant une position verrouillée dans laquelle elle maintient la porte annexe en position fermée, et une position déverrouillée dans laquelle elle permet l'ouverture de la porte annexe ;
   o Un logement propre à accueillir un levier d'actionnement de l'organe d'entraînement manuel ;
- Un capteur propre à détecter la position ouverte ou fermée de la porte principale ;
- Un capteur propre à détecter la position ouverte ou fermée de la porte annexe ;
- Un capteur propre à détecter la présence ou l'absence du levier d'actionnement dans son logement ;
- Une unité de contrôle reliée à la motorisation, à la serrure, aux capteurs et à un circuit de commande du frein, et programmée pour effectuer les opérations suivantes, tant que la porte principale est détectée ouverte, que l'actionneur manuel de sécurité est actif et que le levier d'actionnement est détecté absent de son logement :
- tant que la porte annexe est détectée fermée :
   o commander le verrouillage de la serrure de la porte annexe ;
   o commander le maintien ou le passage du frein en position desserrée ;
- tant que la porte annexe est détectée ouverte :
   o commander le maintien ou le passage du frein en position serrée.

Selon un mode particulier de réalisation, le convoyeur est un carrousel tournant pourvu d'un arbre par lequel il est entraîné en rotation, et l'organe d'entraînement se présente sous forme d'une roue accouplée à l'arbre du carrousel par une transmission mécanique.

La roue est par exemple pourvue d'une empreinte complémentaire d'une contre-empreinte formée sur le levier d'actionnement.

La motorisation du convoyeur est par exemple un moteur-couple.

L'installation comprend avantageusement un circuit fluidique de commande du frein. Dans ce cas, le circuit fluidique de commande du frein comprend typiquement :
- une source de fluide sous pression,
- un conduit d'amenée reliant la source de fluide sous pression au frein,
- une première électrovanne montée sur le conduit d'amenée, pilotée par l'unité de contrôle,
- une deuxième électrovanne montée sur le conduit d'amenée entre la première électrovanne et pilotée par l'actionneur manuel de sécurité.

Ainsi, selon un mode de réalisation, en position inactive de l'actionneur manuel de sécurité la deuxième électrovanne est fermée, tandis qu'en position active de l'actionneur manuel de sécurité la deuxième électrovanne est ouverte.

Par ailleurs, selon un mode de réalisation, pour commander le maintien ou le passage du frein en position desserrée, l'unité de contrôle commande le maintien ou, respectivement, le passage de la première électrovanne en position fermée, tandis que pour commander le maintien ou le passage du frein en position serrée, l'unité de contrôle commande le maintien ou, respectivement, le passage de la première électrovanne en position ouverte.

Il est proposé, en deuxième lieu, un procédé de manutention d'articles dans une installation telle que présentée ci-dessus, qui comprend les opérations suivantes, commandées par l'unité de contrôle tant que la porte principale est détectée ouverte, que l'actionneur manuel de sécurité est actif et que le levier d'actionnement est détecté absent de son logement :
- tant que la porte principale est détectée ouverte, que l'actionneur manuel de sécurité est actif et que le levier d'actionnement est détecté absent de son logement :
- tant que la porte annexe est détectée fermée :
   o commander le verrouillage de la serrure de la porte annexe ;
   o commander le maintien ou le passage du frein en position desserrée ;
- tant que la porte annexe est détectée ouverte :
   o commander le maintien ou le passage du frein en position serrée.

D'autres objets et avantages de l'invention apparaîtront à la lumière de la description d'un mode de réalisation, faite ci-après en référence aux dessins annexés dans lesquels :
- la **FIG.1** est une vue schématique en perspective montrant une installation de manutention d'articles ;
- la **FIG.2** est une vue partielle en perspective de dessus, selon un autre angle, de l'installation de la **FIG.1** ;
- la **FIG.3** est une vue partielle en perspective de dessous de l'installation de la **FIG.2** ;
- la **FIG.4** est une vue de détail en perspective de l'installation de la **FIG.1****,** illustrant une intervention de maintenance, avec, en médaillons, des détails à plus grande échelle centrés sur un organe d'entraînement manuel du convoyeur, un logement d'accueil d'un levier d'actionnement et un actionneur manuel de sécurité ;
- la **FIG.5** est une vue schématique de dessus de l'installation des figures précédentes, illustrant le fonctionnement de l'installation.

Sur les dessins est partiellement représentée une installation 1 de manutention d'articles **2, 3.** Les articles **2, 3** sont ici des corps creux. Plus précisément, dans l'exemple illustré, ces corps creux **2, 3** se présentent notamment sous forme d'ébauches de récipients (ou, en l'espèce, de préformes **2**) en matière plastique, ou encore sous forme de récipients **3** formé à partir des ébauches (ou des préformes **2**)**.**

L'installation **1** est par exemple configurée pour effectuer sur les récipients **3** des opérations consécutives à leur fabrication, par ex. remplissage et/ou étiquetage. Dans ce cas, l'installation **1** comprend une unité de remplissage et/ou une unité d'étiquetage.

Néanmoins, selon un mode de réalisation illustré sur les dessins, l'installation **1** est destinée à la fabrication des récipients **3** à partir des préformes **2.**

A cet effet, l'installation **1** comprend, en premier lieu, au moins un convoyeur **4** qui assure le transport des corps creux **2, 3.** Selon un mode de réalisation, l'installation **1** comprend une unité **5** de formage des récipients **3** à partir des préformes **2.** Dans ce cas, c'est l'unité **5** de formage elle-même qui est équipée du convoyeur **4.**

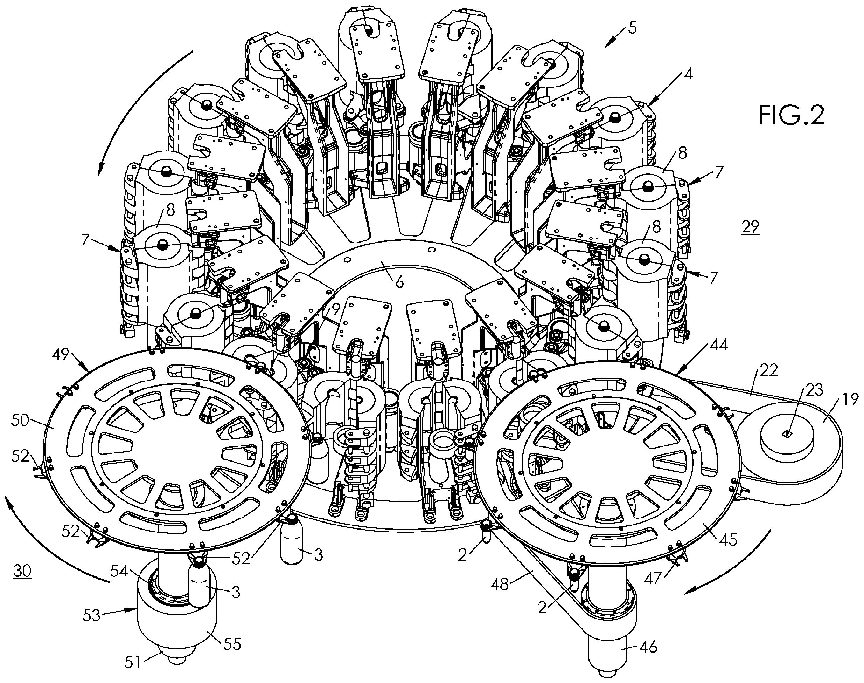

En l'espèce, le convoyeur **4** comprend un support **6** mobile et une pluralité de postes **7** de formage montés sur ce support **6** mobile. Dans l'exemple illustré, le convoyeur **4** est du type tournant (on l'appelle dans ce cas « carrousel », et le support **6** est appelé « roue »). Comme on le voit notamment sur la **FIG.2****,** les postes **7** de formage sont répartis sur une périphérie de la roue **6.**

Chaque poste **7** de formage comprend un moule **8** incluant deux demi-moules articulés autour d'une charnière entre :
- une position ouverte (visible dans la partie centrale basse de la **FIG.2****)** dans laquelle les deux demi-moules sont écartés l'un de l'autre pour permettre l'introduction entre eux d'une préforme **2** ou l'évacuation d'un récipient **3** formé, et
- une position fermée dans laquelle les deux demi-moules sont réunis pour définir conjointement une empreinte du modèle de récipient à former.

Chaque moule **8** est équipé d'un mécanisme **9** d'ouverture et de fermeture (par ex. à bielles et came).

Chaque poste **7** de formage comprend en outre un dispositif d'injection, dans chaque préforme **2** (préalablement chauffée et introduite dans un moule **8**)**,** d'un fluide sous pression (par ex. de l'air) pour déformer celle-ci jusqu'à lui conférer l'empreinte du modèle de récipient lorsqu'elle est plaquée intérieurement contre le moule **8.**

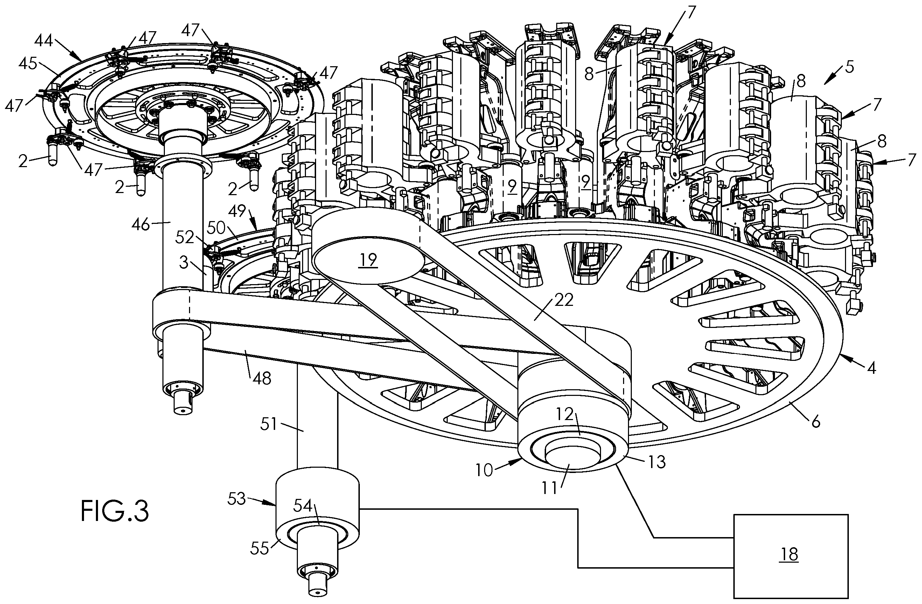

L'installation **1** comprend, en deuxième lieu, une motorisation **10** couplée au carrousel 4 pour l'entraîner dans un mouvement cyclique (rotatif dans l'exemple évoqué ci-dessus et illustré sur les dessins, en particulier sur la **FIG.3**)**.** La roue **6** est solidaire d'un arbre **11,** et c'est à cet arbre **11** qu'est accouplée la motorisation **10.**

Selon un mode particulier de réalisation, la motorisation **10** est du type moteur-couple, c'est-à-dire qu'il s'agit d'un servomoteur sans balais à aimants permanents (encore appelé moteur synchrone à aimants permanents, ou encore moteur sans balais à courant continu). Divers modèles sont notamment proposés par la société Etel. Cette motorisation **10** comprend ainsi un rotor **12** central, directement monté sur l'arbre **11** (et solidaire en rotation de celui-ci) et un stator **13** périphérique.

Selon un exemple de réalisation, la motorisation **10** comprend une ou plusieurs bobines solidaire(s) du stator **13,** et une série d'aimants permanents solidaires du rotor **12.** Lorsque la bobine est parcourue par un courant électrique, elle induit dans les aimants permanents une force électromotrice qui anime le rotor **12** d'un mouvement de rotation dont la vitesse est proportionnelle à l'intensité du courant.

L'installation **1** comprend, en troisième lieu, un frein **14** pouvant adopter deux positions :
- une position serrée dans laquelle le frein **14** bloque le mouvement du carrousel, et
- une position desserrée dans laquelle le frein **14** libère le mouvement du carrousel.

Ce frein **14** agit par ex. sur l'arbre. Il est par ex. du type à tambour, et comprend alors des sabots qui, en position serrée, viennent enserrer l'arbre **11** et qui, en position desserrée, sont écartés de celui-ci.

Selon un mode de réalisation particulier, l'installation **1** comprend un circuit **15** fluidique de commande du frein **14.** Ce circuit **15** comprend, dans l'exemple illustré, une source **16** de fluide sous pression (par ex. de l'air ou de l'huile), un conduit **17** d'amenée reliant la source **15** au frein **14,** ainsi qu'une première électrovanne **EV1** montée sur le conduit **17,** et une deuxième électrovanne **EV2** montée sur le conduit **17** en aval de la première électrovanne **EV1** (dans le sens de circulation du fluide de la source **16** vers le frein **14**)**.**

L'installation **1** comprend, en quatrième lieu, une unité **18** (électronique ou informatique) de contrôle programmable, reliée à la motorisation **10.** Dans le mode de réalisation illustrée, l'unité **18** de contrôle est reliée au stator **13** pour commander l'intensité du courant délivré à la bobine pour la mise en rotation du rotor **R.**

Cette unité **18** de contrôle se présente par ex. sous forme d'un automate programmable industriel (API), pourvu d'une électronique de commande (par ex. un processeur) et une interface homme-machine (typiquement un écran associé à un clavier, ou éventuellement un écran tactile) par laquelle un opérateur peut introduire des instructions ou prendre connaissance d'informations relatives au fonctionnement de l'installation **1,** et en particulier de l'unité **5** de formage.

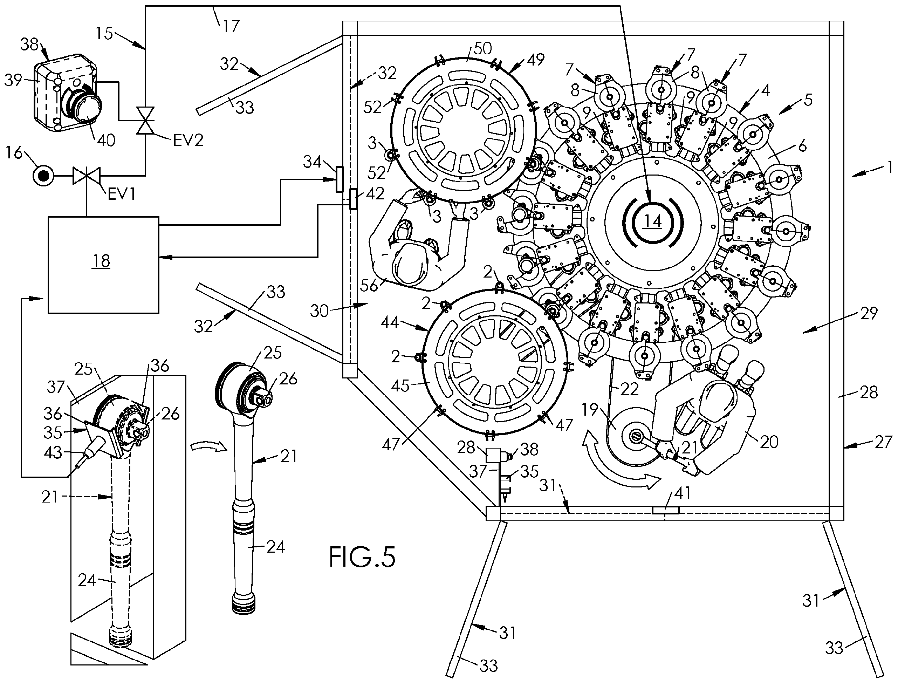

Comme on le voit sur la **FIG.5****,** l'unité **18** de contrôle est reliée à la première électrovanne **EV1** dont elle pilote l'état :
- ouvert, mettant en communication fluidique la source **16** de fluide sous pression avec la portion du conduit **17** située en aval de la première électrovanne **EV1,** ou
- fermé, bloquant le passage du fluide entre l'amont (c'est-à-dire la source **16**) et la portion du conduit **17** en aval de la première électrovanne **EV1.**

Selon un mode particulier de réalisation, le frein est par défaut desserré.

En d'autres termes, en l'absence de fluide sous pression parvenant au frein **14,** celui-ci est maintenu desserré, par ex. au moyen d'un (ou plusieurs) ressort(s) de rappel.

En revanche, dès lors que le fluide sous pression parvient au frein **14,** il force le frein **14** à se serrer à l'encontre du (des) ressort(s).

L'installation comprend, en cinquième lieu, un organe **19** d'entraînement manuel du convoyeur **4.** Cet entraînement est dit manuel car il peut être actionné à la main par un opérateur **20** au moyen d'un levier **21** d'actionnement.

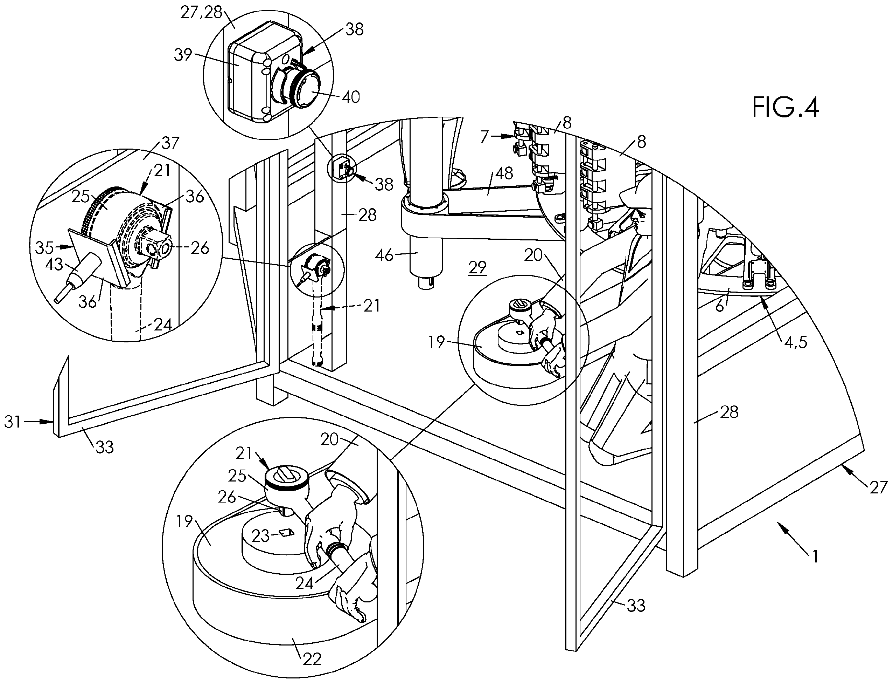

Dans l'exemple illustré sur les **FIG.3** et **FIG.4****,** cet organe **19** d'entraînement se présente sous forme d'une roue (telle qu'une poulie ou une roue dentée) accouplée à l'arbre **11** par une transmission **22** mécanique (à courroie ou, respectivement, à chaîne ou engrenage).

Comme illustré sur la **FIG.4****,** et plus particulièrement dans le médaillon de détail inférieur, la roue **19** est pourvue d'une empreinte **23** (en l'espèce de type femelle, sous forme d'un trou à section par exemple carrée).

Dans l'exemple illustré, le levier **21** d'actionnement est une clé, qui comprend un manche **24** et, à une extrémité de ce manche **24,** une tête **25** pourvue d'une contre-empreinte **26** complémentaire de l'empreinte **23** (la contre-empreinte **26** est ici de type mâle - il s'agit d'un embout à section par exemple carrée).

L'installation **1** comprend, en sixième lieu, un bâti **27** abritant le convoyeur **4** (dans le mode de réalisation illustré, le bâti **27** abrite l'unité **5** de formage complète).

Ce bâti **27** comprend une ossature **28** qui peut être formée d'un assemblage de montants et de traverses (typiquement sous forme de profilés en aluminium).

Le bâti **27** définit autour du convoyeur **4** au moins deux zones de maintenance distinctes :
- une première zone **29** de maintenance, dite principale, dans laquelle se trouve l'organe **19** d'entraînement manuel, et
- une deuxième zone **30** de maintenance, dite annexe.

La zone **30** annexe de maintenance est distante de la zone **29** principale de maintenance. Dans l'exemple illustré, les zones **29, 30** de maintenance sont diamétralement opposées.

Le bâti **27** comprend une porte **31** principale d'accès à la zone **29** principale de maintenance, et une porte **32** annexe d'accès à la zone **30** annexe de maintenance.

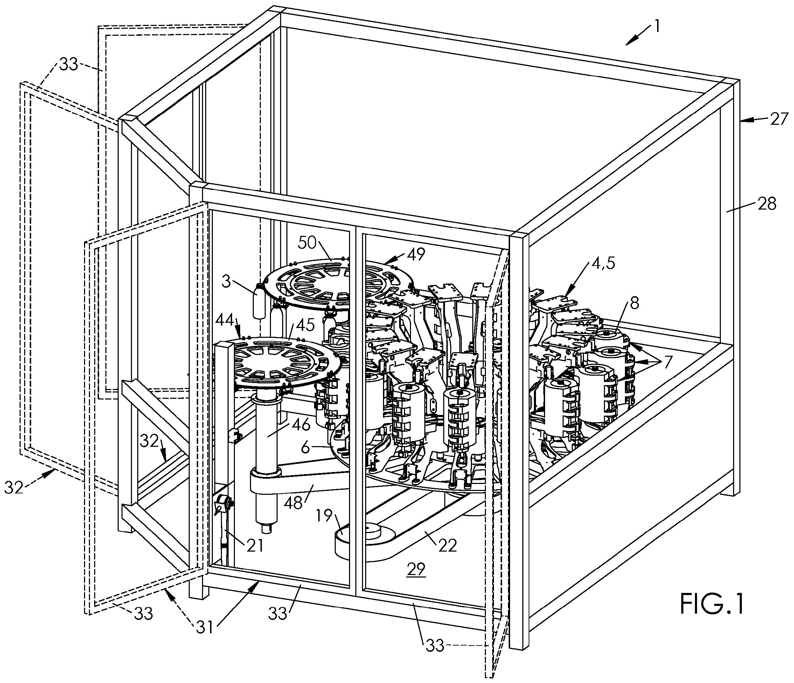

La porte **31** principale, qui peut comprendre un vantail **33** ou, comme dans l'exemple illustré, deux vantaux **33,** monté(s) sur l'ossature **28,** peut adopter une position fermée (en trait plein sur la **FIG.1**)**,** dans laquelle elle bloque l'accès à la zone **29** principale de maintenance, et une position ouverte (en pointillés sur la **FIG.1****,** et en trait plein sur les **FIG.4** et **FIG.5**) dans laquelle elle donne accès à la zone **29** principale de maintenance.

De même, la porte **32** annexe, qui peut comprendre un vantail **33** ou, comme dans l'exemple illustré, deux vantaux **33,** monté(s) sur l'ossature **28,** peut adopter une position fermée (en trait plein sur la **FIG.1**)**,** dans laquelle elle bloque l'accès à la zone **30** annexe de maintenance, et une position ouverte (en pointillés sur la **FIG.1****,** et en trait plein sur les **FIG.4** et **FIG.5**) dans laquelle elle donne accès à la zone **30** annexe de maintenance.

Le bâti **27** est pourvu d'une serrure **34** associée à la porte **32** annexe. Cette serrure **34** peut adopter deux positions :
- une position verrouillée dans laquelle, la porte **32** annexe étant en position fermée, la serrure **34** maintient la porte **32** annexe dans cette position (en pointillés sur la **FIG.5**) ;
- une position déverrouillée, dans laquelle la serrure **34** permet l'ouverture (ou la fermeture) de la porte **32** annexe.

Cette serrure **34** peut être partiellement intégrée à un vantail **33** de la porte **32** annexe, et commander le blocage d'une crémone portée par la porte **32** annexe et venant en prise avec une gâche portée par l'ossature **28.**

Cette serrure **34** est avantageusement du type électromécanique, c'est-à-dire qu'elle comprend une partie mobile qui peut être actionnée à distance. En l'occurrence, la serrure **34** est reliée à l'unité **18** de contrôle, qui peut en commander le verrouillage ou, au contraire, le déverrouillage, selon qu'une opération de maintenance est en cours ou non dans la zone principale.

Par ailleurs, comme on le voit sur la **FIG.4****,** et plus encore dans le médaillon de détail à gauche, le bâti **27** définit un logement **35** propre à accueillir le levier **21.** Selon un mode particulier de réalisation, le logement **35** comprend une paire de pattes **36** qui font saillie d'une paroi **37** (ou d'un montant) du bâti **27,** et dans laquelle peut venir s'emboîter la tête du levier qui s'y trouve ainsi suspendu, comme illustré en pointillés sur la **FIG.5****.**

L'installation **1** comprend, en septième lieu, un actionneur **38** manuel de sécurité, susceptible d'adopter :
- une position inactive dans laquelle il force le desserrage du frein **14,** et
- une position active dans laquelle il permet le serrage ou le desserrage du frein **14** sur commande de l'unité **18** de contrôle.

Comme on le voit sur la **FIG.5****,** l'actionneur **38** manuel de sécurité comprend un boîtier **39** fixé sur une paroi (ou un montant) du bâti **27,** et un bouton-poussoir **40** monté à la fois de manière coulissante et tournante par rapport au boîtier **39,** entre une position sortie (illustrée sur la **FIG.5**) correspondant à la position inactive de l'actionneur **38,** et une position rentrée correspondant à la position active de l'actionneur **38.**

Le passage de la position déployée à la position rentrée du bouton-poussoir **40** se fait par simple appui sur celui-ci, tandis que pour permettre le passage inverse de la position rentrée à la position sortie, il est nécessaire d'imprimer au bouton-poussoir **40** une rotation.

Selon un mode particulier de réalisation illustré sur la **FIG.5****,** l'actionneur **38** manuel de sécurité est relié à la deuxième électrovanne **EV2.** Concrètement, en position inactive (c'est-à-dire en position sortie du bouton-poussoir **38**)**,** l'actionneur **38** manuel de sécurité commande la fermeture de la deuxième électrovanne **EV2.** De la sorte, quelle que soit la position (ouverte ou fermée) de la première électrovanne **EV1,** le frein **14,** non alimenté en fluide, adopte sa position desserrée par action libératrice de son (ses) ressort(s).

En revanche, en position active de l'actionneur **38** (c'est-à-dire en position rentrée du bouton-poussoir **40**), l'actionneur **38** commande l'ouverture de la deuxième électrovanne **EV2.** L'état du frein **14** dépend alors de la position de la première électrovanne **EV1,** commandée par l'unité de contrôle :
En position ouverte de la première électrovanne **EV1** (avec la deuxième électrovanne **EV2** également ouverte), la source **16** de fluide sous pression est mise en communication avec le frein **14,** qui est alors placé en position serrée à l'encontre de son (ses) ressort(s) ;
A contrario, en position fermée de la première électrovanne **EV1** (avec la deuxième électrovanne **EV2** ouverte), le fluide ne circule plus dans le circuit **15** et le frein **14** est placé en position desserrée par action libératrice de son (ses) ressort(s).

L'installation **1** comprend, en huitième lieu, des capteurs reliés à l'unité **18** de contrôle, à savoir :
- Un premier capteur **41** propre à détecter la position ouverte ou fermée de la porte **31** principale ;
- Un deuxième capteur **42** propre à détecter la position ouverte ou fermée de la porte **32** annexe ;
- Un troisième capteur **43** propre à détecter la présence ou l'absence du **21** levier d'actionnement dans son logement **35.**

Chacun de ces capteurs **41, 42, 43** est par ex. un capteur de proximité, pourvu d'un générateur de champ électrique ou magnétique (ou électromagnétique), qui détecte la présence d'un objet (notamment métallique) par altération du champ émis. En variante, on peut utiliser un capteur capacitif, dont la capacité (et donc le signal) change à l'approche d'un objet.

Le premier capteur **41** adresse à l'unité **18** de contrôle soit un signal caractéristique de la présence de la porte **31** principale (correspondant à sa position fermée), soit un signal caractéristique de son absence (correspondant à sa position ouverte).

De la même manière, le deuxième capteur **42** adresse à l'unité **18** de contrôle soit un signal caractéristique de la présence de la porte **32** annexe (correspondant à sa position fermée), soit un signal caractéristique de son absence (correspondant à sa position ouverte).

Le troisième capteur **43** adresse à l'unité **18** de contrôle soit un signal caractéristique de la présence du levier **21** dans son logement **35,** soit un signal caractéristique de l'absence du levier **21** dans son logement **35.**

Comme on le voit sur les dessins, et en particulier sur les **FIG.2****,** **FIG.3** et **FIG.5****,** l'installation **1** peut comprendre un ou plusieurs dispositifs de transfert des articles **2, 3** vers ou depuis le convoyeur **4.**

Dans l'exemple illustré, l'installation **1** comprend un dispositif **44** de transfert amont des préformes **2** vers le carrousel **4.** Ce dispositif **44** de transfert amont comprend une roue **45** montée sur un arbre **46** tournant, et une série de pinces **47** de préhension montées sur une périphérie de la roue **45,** chaque pince **47** pouvant adopter une position ouverte dans laquelle elle peut accueillir ou déposer une préforme **2,** et une position fermée dans laquelle elle peut agripper une préforme **2** pour la déplacer dans un mouvement circulaire.

Selon un mode de réalisation illustré sur les dessins, et en particulier sur la **FIG.3****,** la roue **45** du dispositif **44** de transfert amont est synchronisée en rotation au carrousel **4** de l'unité **5** de formage, au moyen d'une courroie **48** qui circule sur des pignons solidaires de leurs arbres **11, 46** respectifs. En variante, la synchronisation de la roue 45 du dispositif **44** de transfert pourrait être électrique, et réalisée par l'unité **18** de contrôle. Dans ce cas, la roue **45** serait mue par un moteur électrique et un codeur en mesurerait la position angulaire instantanée pour communiquer cette position à l'unité **18** de contrôle.

Le dispositif **44** de transfert amont permet d'alimenter le carrousel **4** en préformes **2** chaudes, en prévision de leur formage en récipients **3.**

Par ailleurs, dans l'exemple illustré, l'installation **1** comprend également un dispositif **49** de transfert aval des récipients **3** formés. Ce dispositif **49** de transfert aval comprend une roue **50** montée sur un arbre **51** tournant, et une série de pinces **52** de préhension montées sur une périphérie de la roue **50,** chaque pince **52** pouvant adopter une position ouverte dans laquelle elle peut accueillir ou déposer un récipient **3** formé, et une position fermée dans laquelle elle peut agripper un récipient **3** pour le déplacer dans un mouvement circulaire.

Selon un mode de réalisation illustré sur les dessins, et en particulier sur la **FIG.3****,** la roue **50** du dispositif **49** de transfert aval est mue en rotation par un moteur-couple **53** relié à (et piloté par) l'unité **18** de contrôle. Ce moteur-couple **53** comprend un rotor **54** solidaire de l'arbre **51** et un stator **55** relié à l'unité **18** de contrôle qui en commande l'intensité du courant d'alimentation.

L'unité **18** de contrôle est programmée pour synchroniser la rotation de la roue **50** à celle du carrousel **4,** de manière que chaque pince **52** parvienne systématiquement au droit d'un moule **8** pour en décharger, à l'ouverture de celui-ci, le récipient **3** à peine formé.

A cet effet, le carrousel **4** et la roue **18** du dispositif de transfert aval sont tous deux équipés d'un codeur qui fournit à l'unité **18** de contrôle la position angulaire instantanée du carrousel **4** et, respectivement, de la roue **50.**

En fonctionnement normal de l'installation **1** :
- les portes **31, 32** sont fermées (les capteurs **41, 42** renvoient à l'unité **18** de contrôle un signal caractéristique de cette position) ;
- l'actionneur **38** manuel de sécurité est en position inactive (bouton-poussoir **40** en position sortie), ce qui ferme la deuxième électrovanne **EV2** et libère par conséquent le frein **14,** qui est maintenu en position desserrée par son (ou ses) ressort(s) ;
- le levier **21** est dans son logement **35** (le capteur **43** renvoie à l'unité **18** de contrôle un signal caractéristique de cette présence) ;
- l'unité **18** de contrôle pilote la rotation du carrousel **4** et, le cas échéant, de tout dispositif **49** de transfert qui lui est asservi (le dispositif **49** de transfert aval dans l'exemple illustré).

Ce fonctionnement peut néanmoins être entaché d'un incident. Il peut typiquement s'agir d'un défaut d'ouverture (ou de fermeture) d'un moule **8,** provoqué par exemple par le grippage d'un mécanisme **9** d'ouverture ou par le mauvais positionnement d'un article **2, 3.** Quoiqu'il en soit, l'unité **18** de contrôle reçoit d'un capteur (par ex. une caméra ou un capteur de proximité) un signal caractéristique de l'incident.

L'unité **18** de contrôle est programmée pour, dans ce cas, stopper la rotation du carrousel **4** afin d'éviter (ou de limiter) d'éventuels dégâts matériels causés par l'incident et de permettre l'intervention d'un opérateur **20** de maintenance.

L'unité **18** de contrôle est à cet effet programmée pour générer un signal d'alerte à l'intention de l'opérateur **20** de maintenance, de manière à inciter celui-ci à intervenir sans délai pour minimiser l'interruption de la production.

Toute intervention nécessitant une rotation commandée manuellement du carrousel **4** ne peut être réalisée que dans la zone **29** principale de maintenance, car c'est dans cette zone **29** qu'est situé l'organe **19** d'entraînement manuel.

Pour ce faire, l'opérateur **20** ouvre la porte **31** principale et accède à la zone **29** principale de maintenance.

L'unité **18** de contrôle détecte, via le premier capteur **41,** l'ouverture de la porte principale **31.**

Pour permettre à l'opérateur de réaliser une rotation manuelle du carrousel **4,** le levier **21** est requis, et l'unité **18** de contrôle doit lui laisser la main en débrayant la motorisation **10.**

Ce débrayage n'est commandé par l'unité **18** de contrôle qu'à condition que la zone **30** annexe de maintenance soit en sécurité.

En pratique, plusieurs conditions sont requises.

Premièrement, l'opérateur **20** doit activer l'actionneur **38** manuel de sécurité. En l'espèce, cette opération est réalisée par enfoncement du bouton-poussoir **40,** qui passe de sa position sortie à sa position rentrée, ce qui ouvre la deuxième électrovanne **EV2** et met le frein **14** en communication avec la deuxième électrovanne **EV2** via le conduit **17** d'amenée.

L'unité **18** de contrôle est programmée pour ne pas permettre une rotation du carrousel **4** si (et tant que) la porte **32** annexe est détectée ouverte. En effet, l'ouverture de la porte **32** annexe signifie qu'un autre opérateur **56** pourrait accéder à la zone **30** annexe de maintenance et serait dès lors en danger physique en raison des mouvements du carrousel **4** (et, comme nous le verrons, des mouvements synchrones du dispositif **49** de transfert aval) commandés manuellement par l'opérateur **20** assurant des manœuvres depuis la zone **29** principale de maintenance.

Si la porte **32** annexe est détectée ouverte, comme illustré en trait plein sur la **FIG.5****,** l'unité **18** de contrôle commande, par sécurité, le serrage du frein **14.** Cette commande est réalisée par ouverture de la première électrovanne **EV1,** qui met en communication la source **16** de fluide sous pression avec le frein **14** et serre celui-ci à l'encontre de son (ses) ressort(s).

Le frein **14** est maintenu serré sur commande de l'unité **18** de contrôle tant que la porte **32** annexe est détectée ouverte.

En revanche, si la porte **32** annexe est détectée fermée (en pointillés sur la **FIG.5**) par l'unité **18** de contrôle, alors celle-ci débraye la motorisation **10** du carrousel **4** (en cessant de l'alimenter en courant) et commande le maintien du frein **14** en position desserrée. Pour ce faire, l'unité **18** de contrôle maintient la première électrovanne **EV1** en position fermée, ce qui isole le frein **14** de la source **16** de fluide sous pression.

En outre, pour éviter toute intrusion intempestive d'un opérateur **56** dans la zone **30** annexe de maintenance pendant l'intervention réalisée dans la zone **29** principale de maintenance, l'unité **18** de contrôle commande le verrouillage de la serrure **34,** qui maintient alors la porte **32** annexe en position fermée.

Cette situation est maintenue tant que le levier **21** est détecté absent de son logement **35,** ce qui signifie que l'opérateur **20** qui se trouve dans la zone **29** principale de maintenance effectue (ou est susceptible d'effectuer) des opérations sur le carrousel **4.**

Ces opérations peuvent nécessiter une rotation manuelle le carrousel **4,** par ex. pour amener dans la zone **29** principale de maintenance un moule **8** qui n'y trouverait pas.

Comme illustré sur la **FIG.4****,** pour faire tourner le carrousel **4,** l'opérateur **20** emboîte sur (ou dans) l'empreinte **23** de l'organe **19** d'entraînement manuel la contre-empreinte **26** correspondante du levier **21.** Dès lors, le levier **21** est accouplé au carrousel **4,** et toute rotation imprimée au levier **21** par l'exercice d'un effort sur son manche **24** entraîne une rotation du carrousel **4.**

Comme, dans l'exemple illustré, le dispositif **44** de transfert amont est accouplé mécaniquement (par la courroie **48**) au carrousel **4,** la rotation du carrousel **4** entraîne la rotation synchrone du dispositif **44** de transfert amont, qui ne peut par conséquent en être désaccouplé. Si une opération de maintenance doit être réalisée sur le dispositif **44** de transfert amont, dont, dans l'exemple illustré, une partie de la périphérie se trouve en bordure de la zone **29** principale de maintenance, c'est donc par une action sur l'organe **19** d'entraînement du carrousel que l'opérateur **20** amène à sa portée la partie du dispositif **44** nécessitant son intervention.

A contrario, dans l'exemple illustré, la rotation synchrone du dispositif **49** de transfert aval avec celle du carrousel **4** est commandée par l'unité **18** de contrôle.

Aussi, pour éviter toute désynchronisation du dispositif **49** de transfert aval et du carrousel **4,** l'unité **18** de contrôle est programmée pour maintenir sa maîtrise de la rotation de la roue **50** du dispositif **44** de transfert aval.

A cet effet, le codeur du carrousel **4** poursuit sa transmission instantanée de son information angulaire à l'unité **18** de contrôle, qui commande en conséquence, via le moteur-couple **53,** la rotation de la roue **50** du dispositif **49** de transfert aval de manière synchronisée à la position angulaire du carrousel **4.**

Dès lors que les opérations de maintenance sont terminées, l'opérateur **20** replace le levier **21** dans son logement **35.** La présence du levier **21** dans son logement **35** est détectée par l'unité **18** de contrôle via le capteur **43,** qui lui adresse un signal caractéristique de cette présence.

L'opérateur **20** désactive l'actionneur **38** manuel de sécurité, ce qui maintient le frein **14** desserré (s'il l'était déjà) ou le desserre (s'il était serré). Concrètement, la désactivation de l'actionneur **38** manuel de sécurité, réalisée par rotation et sortie du bouton-poussoir **40,** ferme la deuxième électrovanne **EV2** et isole le frein **14** de la source **16** de fluide sous pression.

L'unité **18** de contrôle reprend alors la commande électrique de la rotation du carrousel **4,** via sa motorisation **10** dont elle assure l'alimentation en courant. Cependant la rotation du carrousel **4** n'est pas commandée tant que la porte **31** principale est détectée ouverte, car l'opérateur **20** peut toujours s'y trouver.

En revanche, dès lors que la porte **31** principale est détectée fermée (c'est-à-dire, en pratique, après que l'opérateur **20** l'a refermée), l'unité **18** de contrôle peut initier sans délai la rotation commandée du carrousel **4** pour faire redémarrer la production.

On voit que cette installation **1,** grâce aux détrompages procurés par les capteurs **41, 42, 43,** et grâce à la programmation de l'unité **18** de contrôle qui empêche toute rotation commandée manuellement du carrousel **4** si (et tant que) la porte **32** annexe est ouverte, et qui empêche toute intrusion dans la zone **30** annexe tant qu'une opération de maintenance est présumée se dérouler dans la zone **29** principale de maintenance (ce qui est détecté notamment par l'absence du levier **21** de son logement **35**)**,** permet de sécuriser les personnels de maintenance en les préservant de tout choc avec des pièces dont ils seraient inconscients du mouvement.

On notera que la présente description ne saurait être considérée comme limitée aux modes de réalisation décrits ci-dessus à titre d'exemple, et que certaines variantes ou alternatives à la portée d'un homme du métier pourraient être considérées sans sortir du cadre de l'invention, telle que définie par les revendications.

## Revendications

1. Installation (**1**) de manutention d'articles (**2, 3**), qui comprend :
- Un convoyeur (**4**) ;
- Une motorisation (**10**) couplée au convoyeur (**4**) pour entraîner celui-ci dans un mouvement cyclique ;
Un bâti (27) abritant le convoyeur (4), ce bâti comprenant:une porte (31) principale d'accès à une zone (29) principale de maintenance dans laquelle se trouve l'organe (19) d'entraînement manuel, et une porte (32) annexe d'accès à une zone (39) annexe de maintenance distincte de la zone (29) principale de maintenance, cette porte (32) annexe pouvant adopter une position fermée dans laquelle elle bloque l'accès à la zone (30) annexe de maintenance, et une position ouverte dans laquelle elle donne accès à la zone (30) annexe de maintenance; Charactérisée en ce que l'installation de manutention d'articles comprenne: J
- Un frein (**14**) pouvant adopter une position serrée dans laquelle il bloque le mouvement du convoyeur (**4**) et une position desserrée dans laquelle il libère le mouvement du convoyeur (**4**) ;
- Un actionneur (**38**) manuel de sécurité, apte à adopter une position inactive dans laquelle il commande le desserrage du frein (14) et une position active dans laquelle il permet son serrage ;
- Un organe (**19**) d'entraînement manuel du convoyeur (4) ;
- Le bâti (**27**) abritant le convoyeur (**4**) comprenant :
∘ une serrure (**34**) ayant une position verrouillée dans laquelle elle maintient la porte (**32**) annexe en position fermée, et une position déverrouillée dans laquelle elle permet l'ouverture de la porte (**32**) annexe ;
∘ Un logement (**35**) propre à accueillir un levier (**21**) d'actionnement de l'organe (**19**) d'entraînement manuel ;
- Un capteur (**41**) propre à détecter la position ouverte ou fermée de la porte (**31**) principale ;
- Un capteur (**42**) propre à détecter la position ouverte ou fermée de la porte (**32**) annexe ;
- Un capteur (**43**) propre à détecter la présence ou l'absence du levier (**21**) d'actionnement dans son logement (**35**) ;
- Une unité (**18**) de contrôle, reliée à la motorisation (**10**), à la serrure (**34**), aux capteurs (**41, 42, 43**), et à un circuit (**15**) de commande du frein (**14**), et programmée pour commander les opérations suivantes, tant que la porte (**31**) principale est détectée ouverte, que l'actionneur (**38**) manuel de sécurité est actif et que le levier (**21**) d'actionnement est détecté absent de son logement (**35**) :
- tant que la porte (**31**) annexe est détectée fermée :
∘ commander le verrouillage de la serrure (**34**) de la porte (**32**) annexe ;
∘ commander le maintien ou le passage du frein (**14**) en position desserrée ;
- tant que la porte (**32**) annexe est détectée ouverte :
∘ commander le maintien ou le passage du frein (**14**) en position serrée.

2. Installation (**1**) selon la revendication 1, **caractérisée en ce que** le convoyeur (**4**) est un carrousel tournant pourvu d'un arbre (**11**) par lequel il est entraîné en rotation, et l'organe (**19**) d'entraînement manuel se présente sous forme d'une roue accouplée à l'arbre (**11**) du carrousel (**4**) par une transmission (**22**) mécanique.

3. Installation (**1**) selon la revendication 2, **caractérisée en ce que** l'organe (**19**) d'entraînement manuel est pourvu d'une empreinte (**23**) complémentaire d'une contre-empreinte (**26**) formée sur le levier (**21**) d'actionnement.

4. Installation (**1**) selon l'une des revendications précédentes, **caractérisée en ce que** la motorisation (**10**) est un moteur-couple.

5. Installation (**1**) selon l'une des revendications précédentes, **caractérisée en ce qu'**elle comprend un circuit (**15**) fluidique de commande du frein (**14**).

6. Installation (**1**) selon la revendication 5, **caractérisée en ce que** le circuit (**15**) fluidique de commande du frein (**14**) comprend :
- une source (**16**) de fluide sous pression,
- un conduit (**17**) d'amenée reliant la source (**16**) de fluide sous pression au frein (**14**),
- une première électrovanne (**EV1**) montée sur le conduit (**17**) d'amenée, pilotée par l'unité (**18**) de contrôle,
- une deuxième électrovanne (EV2) montée sur le conduit (17) d'amenée en aval de la première électrovanne (EV1) et pilotée par l'actionneur (38) manuel de sécurité.

7. Installation (1) selon la revendication 6, **caractérisée en ce qu'**en position inactive de l'actionneur (38) manuel de sécurité la deuxième électrovanne (EV2) est fermée, tandis qu'en position active de l'actionneur (**38**) manuel de sécurité la deuxième électrovanne (**EV2**) est ouverte.

8. Installation (**1**) selon la revendication 7, **caractérisée en ce que**, pour commander le maintien ou le passage du frein (**14**) en position desserrée, l'unité (**18**) de contrôle commande le maintien ou, respectivement, le passage de la première électrovanne (**EV1**) en position fermée, tandis que pour commander le maintien ou le passage du frein (**14**) en position serrée, l'unité (**18**) de contrôle commande le maintien ou, respectivement, le passage de la première électrovanne (**EV1**) en position ouverte.

9. Procédé de manutention d'articles (**2, 3**) au sein d'une installation (**1**) comprenant :
- Un convoyeur (**4**) ;
- Une motorisation (**10**) couplée au convoyeur (**4**) pour entraîner celui-ci dans un mouvement cyclique ;
- Un frein (**14**) pouvant adopter une position serrée dans laquelle il bloque le mouvement du convoyeur (**4**) et une position desserrée dans laquelle il libère le mouvement du convoyeur (**4**) ;
- Un actionneur (**38**) manuel de sécurité, apte à adopter une position inactive dans laquelle il commande le desserrage du frein (**14**) et une position active dans laquelle il permet son serrage ;
- Un organe (**19**) d'entraînement manuel du convoyeur (**4**) ;
- Un bâti (**27**) abritant le convoyeur (**4**), ce bâti (**27**) comprenant :
∘ une porte (**31**) principale d'accès à une zone (**29**) principale de maintenance dans laquelle se trouve l'organe (**19**) d'entraînement manuel,
∘ une porte (**32**) annexe d'accès à une zone (**30**) annexe de maintenance distincte de la zone (**29**) principale de maintenance, cette porte (**32**) annexe pouvant adopter une position fermée dans laquelle elle bloque l'accès à la zone (30) annexe de maintenance, et une position ouverte dans laquelle elle donne accès à la zone (30) annexe de maintenance,
o une serrure (34) ayant une position verrouillée dans laquelle elle maintient la porte (32) annexe en position fermée, et une position déverrouillée dans laquelle elle permet l'ouverture de la porte (32) annexe ;
∘ Un logement (**35**) propre à accueillir un levier (**21**) d'actionnement de l'organe (**19**) d'entraînement manuel ;
- Un capteur (**41**) propre à détecter la position ouverte ou fermée de la porte (**31**) principale ;
- Un capteur (**42**) propre à détecter la position ouverte ou fermée de la porte (**32**) annexe ;
- Un capteur (**43**) propre à détecter la présence ou l'absence du levier (**21**) d'actionnement dans son logement (**35**) ;
- Une unité (**18**) de contrôle, reliée à la motorisation (**10**), à la serrure (**34**), aux capteurs (**41, 42, 43**), et à un circuit (**15**) de commande du frein (**14**),
ce procédé comprenant les opérations suivantes, commandées par l'unité (**18**) de contrôle tant que la porte (**31**) principale est détectée ouverte, que l'actionneur (**38**) manuel de sécurité est actif et que le levier (**21**) d'actionnement est détecté absent de son logement (**35**) :
- tant que la porte (**31**) annexe est détectée fermée :
∘ commander le verrouillage de la serrure (**34**) de la porte (**32**) annexe ;
∘ commander le maintien ou le passage du frein (**14**) en position desserrée ;
- tant que la porte (**32**) annexe est détectée ouverte :
∘ commander le maintien ou le passage du frein (**14**) en position serrée.

10. Procédé selon la revendication 9, **caractérisé en ce que**, l'installation (**1**) étant équipée d'un circuit (**15**) fluidique de commande du frein (**14**) comprenant :
- une source (**16**) de fluide sous pression,
- un conduit (**17**) d'amenée reliant la source (**16**) de fluide sous pression au frein (**14**),
- une première électrovanne (EV1) montée sur le conduit (17) d'amenée, pilotée par l'unité (18) de contrôle,
- une deuxième électrovanne (EV2) montée sur le conduit (17) d'amenée en aval de la première électrovanne (EV1) et pilotée par l'actionneur (38) manuel de sécurité,
le procédé comprend les opérations suivantes, commandées par l'unité (**18**) de contrôle :
- en position inactive de l'actionneur (**38**) manuel de sécurité, commander la fermeture de la deuxième électrovanne (**EV2**), ou
- en position active de l'actionneur (**38**) manuel de sécurité, ouvrir la deuxième électrovanne (**EV2**).

## Patentansprüche

1. Anlage (**1**) zur Handhabung von Gegenständen (**2, 3**)**,** die Folgendes beinhaltet:
- eine Fördereinrichtung (**4**);
- eine Motorisierung (**10**), die mit der Fördereinrichtung (**4**) gekoppelt ist, um diese in eine zyklische Bewegung zu versetzen,
ein Gestell (27), das die Fördereinrichtung (4) aufnimmt, wobei dieses Gestell Folgendes beinhaltet: eine Haupttür (31) für den Zugang zu einem Wartungshauptbereich (29), in dem sich das manuelle Antriebsorgan (19) befindet, und eine Nebentür (32) für den Zugang zu einem Wartungsnebenbereich (39), der sich von dem Wartungshauptbereich (29) unterscheidet, wobei diese Nebentür (32) eine geschlossene Stellung, in der sie den Zugang zu dem Wartungsnebenbereich (30) blockiert, und eine offene Stellung, in der sie den Zugang zu dem Wartungsnebenbereich (30) gewährt, einnehmen kann; **dadurch gekennzeichnet, dass** die Anlage zur Handhabung von Gegenständen Folgendes beinhaltet:
- eine Bremse (**14**)**,** die eine angezogene Stellung, in der sie die Bewegung der Fördereinrichtung (**4**) blockiert, und eine gelöste Stellung, in der sie die Bewegung der Fördereinrichtung (**4**) freigibt, einnehmen kann;
- einen manuellen Sicherheitsbetätiger (**38**)**,** der dazu fähig ist, eine inaktive Stellung, in der er das Lösen der Bremse (**14**) steuert, und eine aktive Stellung, in der er ihr Anziehen ermöglicht, einzunehmen;
- ein manuelles Antriebsorgan (**19**) der Fördereinrichtung (**4**) ;
- wobei das Gestell (**27**)**,** das die Fördereinrichtung (**4**) aufnimmt, Folgendes beinhaltet:
o ein Schloss (**34**)**,** das eine verriegelte Stellung, in der es die Nebentür (**32**) in einer geschlossenen Stellung hält, und eine entriegelte Stellung, in der es das Öffnen der Nebentür (**32**) ermöglicht, aufweist;
o eine Halterung (**35**)**,** die dazu bestimmt ist, einen Betätigungshebel (**21**) des manuellen Antriebsorgans (**19**) aufzunehmen;
- einen Sensor (**41**)**,** der dazu bestimmt ist, die offene oder geschlossene Stellung der Haupttür (**31**) zu erkennen;
- einen Sensor (**42**)**,** der dazu bestimmt ist, die offene oder geschlossene Stellung der Nebentür (**32**) zu erkennen;
- einen Sensor (**43**)**,** der dazu bestimmt ist, das Vorhandensein oder Nichtvorhandensein des Betätigungshebels (**21**) in seiner Halterung (**35**) zu erkennen;
- eine Überwachungseinheit (**18**)**,** die mit der Motorisierung (**10**)**,** dem Schloss (**34**)**,** den Sensoren (**41, 42, 43**) und einem Kreis (**15**) zur Steuerung der Bremse **(14)** verbunden ist und dazu programmiert ist, die folgenden Vorgänge zu steuern, wenn die Haupttür (**31**) als offen erkannt wird, der manuelle Sicherheitsbetätiger (**38**) aktiv ist und der Betätigungshebel (**21**) als in seiner Halterung (**35**) nicht vorhanden erkannt wird:
- wenn die Nebentür (**31**) als geschlossen erkannt wird:
∘ Steuern der Verriegelung des Schlosses (**34**) der Nebentür (**32**);
∘ Steuern des Haltens oder des Überführens der Bremse (**14**) in die gelöste Stellung;
- wenn die Nebentür (**32**) als offen erkannt wird:
∘ Steuern des Haltens oder des Überführens der Bremse (**14**) in die angezogene Stellung.

2. Anlage (**1**) nach Anspruch 1, **dadurch gekennzeichnet, dass** die Fördereinrichtung (**4**) ein Drehkarussell ist, das über eine Welle (**11**) verfügt, über die es in Rotation versetzt wird, und dass das manuelle Antriebsorgan (**19**) die Form eines Rades aufweist, das über ein mechanisches Getriebe (**22**) mit der Welle **(11)** des Karussells (**4**) gekoppelt ist.

3. Anlage (**1**) nach Anspruch 2, **dadurch gekennzeichnet, dass** das manuelle Antriebsorgan (**19**) über eine Prägung (**23**) verfügt, die zu einer Gegenprägung (**26**), die an dem Betätigungshebel (**21**) gebildet ist, komplementär ist.

4. Anlage (**1**) nach einem der vorhergehenden Ansprüche, **dadurch gekennzeichnet, dass** die Motorisierung (**10**) ein Drehmomentmotor ist.

5. Anlage (**1**) nach einem der vorhergehenden Ansprüche, **dadurch gekennzeichnet, dass** sie einen Fluidkreis (**15**) zur Steuerung der Bremse (**14**) beinhaltet.

6. Anlage (**1**) nach Anspruch 5, **dadurch gekennzeichnet, dass** der Fluidkreis (**15**) zur Steuerung der Bremse (**14**) Folgendes beinhaltet:
- eine Druckfluidquelle (**16**),
- eine Zuleitung (**17**), die die Druckfluidquelle (**16**) mit der Bremse (**14**) verbindet,
- ein erstes Magnetventil (**EV1**), das in der Zuleitung (**17**) montiert ist und durch die Überwachungseinheit (**18**) angesteuert wird,
- ein zweites Magnetventil (**EV2**), das in der Zuleitung (**17**) stromabwärts des ersten Magnetventils (**EV1**) montiert ist und durch den manuellen Sicherheitsbetätiger (**38**) angesteuert wird.

7. Anlage (**1**) nach Anspruch 6, **dadurch gekennzeichnet, dass** das zweite Magnetventil (**EV2**) in der inaktiven Stellung des manuellen Sicherheitsbetätigers (**38**) geschlossen ist, während das zweite Magnetventil (**EV2**) in der aktiven Stellung des manuellen Sicherheitsbetätigers (**38**) offen ist.

8. Anlage (**1**) nach Anspruch 7, **dadurch gekennzeichnet, dass** die Überwachungseinheit (**18**) zum Steuern des Haltens oder des Überführens der Bremse (**14**) in die gelöste Stellung das Halten bzw. das Überführen des ersten Magnetventils (**EV1**) in die geschlossene Stellung steuert, während die Überwachungseinheit (**18**) zum Steuern des Haltens oder des Überführens der Bremse (**14**) in die angezogene Stellung das Halten bzw. das Überführen des ersten Magnetventils (**EV1**) in die offene Stellung steuert.

9. Verfahren zur Handhabung von Gegenständen (**2, 3**) in einer Anlage (**1**), die Folgendes beinhaltet:
- eine Fördereinrichtung (**4**);
- eine Motorisierung (**10**), die mit der Fördereinrichtung (**4**) gekoppelt ist, um diese in eine zyklische Bewegung zu versetzen;
- eine Bremse (**14**), die eine angezogene Stellung, in der sie die Bewegung der Fördereinrichtung (**4**) blockiert, und eine gelöste Stellung, in der sie die Bewegung der Fördereinrichtung (**4**) freigibt, einnehmen kann;
- einen manuellen Sicherheitsbetätiger (**38**), der dazu fähig ist, eine inaktive Stellung, in der er das Lösen der Bremse (**14**) steuert, und eine aktive Stellung, in der er ihr Anziehen ermöglicht, einzunehmen;
- ein manuelles Antriebsorgan (**19**) der Fördereinrichtung (**4**) ;
- ein Gestell (**27**), das die Fördereinrichtung (**4**) aufnimmt, wobei dieses Gestell (**27**) Folgendes beinhaltet:
∘ eine Haupttür (**31**) für den Zugang zu einem Wartungshauptbereich (**29**), in dem sich das manuelle Antriebsorgan (**19**) befindet,
∘ eine Nebentür (**32**) für den Zugang zu einem Wartungsnebenbereich (**30**), der sich von dem Wartungshauptbereich (**29**) unterscheidet, wobei diese Nebentür (**32**) eine geschlossene Stellung, in der sie den Zugang zu dem Wartungsnebenbereich (**30**) blockiert, und eine offene Stellung, in der sie den Zugang zu dem Wartungsnebenbereich (**30**) gewährt, einnehmen kann,
∘ ein Schloss (**34**), das eine verriegelte Stellung, in der es die Nebentür (**32**) in einer geschlossenen Stellung hält, und eine entriegelte Stellung, in der es das Öffnen der Nebentür (**32**) ermöglicht, aufweist;
∘ eine Halterung (**35**), die dazu bestimmt ist, einen Betätigungshebel (**21**) des manuellen Antriebsorgans (**19**) aufzunehmen;
- einen Sensor (**41**), der dazu bestimmt ist, die offene oder geschlossene Stellung der Haupttür (**31**) zu erkennen;
- einen Sensor (**42**), der dazu bestimmt ist, die offene oder geschlossene Stellung der Nebentür (**32**) zu erkennen;
- einen Sensor (**43**), der dazu bestimmt ist, das Vorhandensein oder Nichtvorhandensein des Betätigungshebels (**21**) in seiner Halterung (**35**) zu erkennen;
- eine Überwachungseinheit (**18**), die mit der Motorisierung (**10**), dem Schloss (**34**), den Sensoren (**41**, **42, 43**) und einem Kreis (**15**) zur Steuerung der Bremse (**14**) verbunden ist,
wobei dieses Verfahren die folgenden Vorgänge beinhaltet, die durch die Überwachungseinheit (**18**) gesteuert werden, wenn die Haupttür (**31**) als offen erkannt wird, der manuelle Sicherheitsbetätiger (**38**) aktiv ist und der Betätigungshebel (**21**) als in seiner Halterung (**35**) nicht vorhanden erkannt wird:
- wenn die Nebentür (**31**) als geschlossen erkannt wird:
∘ Steuern der Verriegelung des Schlosses (**34**) der Nebentür (**32**);
∘ Steuern des Haltens oder des Überführens der Bremse (**14**) in die gelöste Stellung;
wenn die Nebentür (**32**) als offen erkannt wird:
∘ Steuern des Haltens oder des Überführens der Bremse (**14**) in die angezogene Stellung.

10. Verfahren nach Anspruch 9, **dadurch gekennzeichnet, dass**, während die Anlage (**1**) mit einem Fluidkreis (**15**) zur Steuerung der Bremse (**14**) ausgerüstet ist, der Folgendes beinhaltet:
- eine Druckfluidquelle (**16**),
- eine Zuleitung (**17**)**,** die die Druckfluidquelle (**16**) mit der Bremse (**14**) verbindet,
- ein erstes Magnetventil (**EV1**), das in der Zuleitung (**17**) montiert ist und durch die Überwachungseinheit (**18**) angesteuert wird,
- ein zweites Magnetventil (**EV2**), das in der Zuleitung (**17**) stromabwärts des ersten Magnetventils (**EV1**) montiert ist und durch den manuellen Sicherheitsbetätiger (**38**) angesteuert wird,
das Verfahren die folgenden Vorgänge beinhaltet, die durch die Überwachungseinheit (**18**) gesteuert werden:
- in der inaktiven Stellung des manuellen Sicherheitsbetätigers (**38**)**,** Steuern des Schließens des zweiten Magnetventils (**EV2**), oder
- in der aktiven Stellung des manuellen Sicherheitsbetätigers (**38**), Öffnen des zweiten Magnetventils (**EV2**).

## Claims

1. Facility (1) for handling articles (2, 3), which comprises:
- a conveyor (4);
- a motorization (10) coupled to the conveyor (4) for driving the latter in a cyclical movement,
a frame (27) sheltering the conveyor (4), this frame comprising a main door (31) for access to a main maintenance zone (29) in which the manual driving member (19) is located, and a side door (32) for access to an ancillary maintenance zone (39) distinct from the main maintenance zone (29), this side door (32) being able to adopt a closed position in which it blocks access to the ancillary maintenance zone (30), and an open position in which it gives access to the ancillary maintenance zone (30); **characterized in that** the facility for handling articles comprises:
- a brake (14) that can adopt a clamped position in which it blocks the movement of the conveyor (4) and a released position in which it frees the movement of the conveyor (4);
- a manual safety actuator (38), capable of adopting an inactive position in which it controls the releasing of the brake (14) and an active position in which it allows the clamping thereof;
- a manual driving member (19) of the conveyor (4);
- the frame (27) housing the conveyor (4) comprising:
o a lock (34) having a locked position in which it keeps the side door (32) in closed position, and an unlocked position in which it allows the side door (32) to be opened;
o a housing (35) designed to accommodate a lever (21) for actuating the manual driving member (19) ;
- a sensor (41) designed to detect the open or closed position of the main door (31);
- a sensor (42) designed to detect the open or closed position of the side door (32);
- a sensor (43) designed to detect the presence or absence of the actuation lever (21) in its housing (35) ;
- a control unit (18), linked to the motorization (10), to the lock (34), to the sensors (41, 42, 43), and to a control circuit (15) of the brake (14), and programmed to control the following operations, as long as the main door (31) is detected to be open, the manual safety actuator (38) is active and the actuation lever (21) is detected to be absent from its housing (35):
- as long as the side door (31) is detected to be closed:
∘ commanding the locking of the lock (34) of the side door (32);
∘ commanding the brake (14) to be kept in or switched to the released position;
- as long as the side door (32) is detected to be open:
∘ commanding the brake (14) to be kept in or switched to the clamped position.

2. Facility (1) according to Claim 1, **characterized in that** the conveyor (4) is a revolving carousel provided with a shaft (11) by which it is driven in rotation, and the manual driving member (19) takes the form of a wheel coupled to the shaft (11) of the carousel (4) by a mechanical transmission (22).

3. Facility (1) according to Claim 2, **characterized in that** the manual driving member (19) is provided with an imprint (23) complementing the counter-imprint (26) formed on the actuation lever (21).

4. Facility (1) according to one of the preceding claims, **characterized in that** the motorization (10) is a torque motor.

5. Facility (1) according to one of the preceding claims, **characterized in that** it comprises a fluidic control circuit (15) of the brake (14).

6. Facility (1) according to Claim 5, **characterized in that** the fluidic control circuit (15) of the brake (14) comprises:
- a source (16) of fluid under pressure,
- an intake duct (17) linking the source (16) of fluid under pressure to the brake (14),
- a first solenoid valve (EV1) mounted on the intake duct (17), driven by the control unit (18),
- a second solenoid valve (EV2) mounted on the intake duct (17) downstream of the first solenoid valve (EV1) and driven by the manual safety actuator (38).

7. Facility (1) according to Claim 6, **characterized in that**, in the inactive position of the manual safety actuator (38), the second solenoid valve (EV2) is closed, whereas, in the active position of the manual safety actuator (38), the second solenoid valve (EV2) is open.

8. Facility (1) according to Claim 7, **characterized in that**, to command the brake (14) to be kept in or switched to the released position, the control unit (18) commands the first solenoid valve (EV1) to be kept in or, respectively, switched to the closed position, whereas, to command the brake (14) to be kept in or switched to the clamped position, the control unit (18) commands the first solenoid valve (EV1) to be kept in or, respectively, switched to the open position.

9. Method for handling articles (2, 3) in a facility (1) comprising:
- a conveyor (4);
- a motorization (10) coupled to the conveyor (4) for driving the latter in a cyclical movement;
- a brake (14) that can adopt a clamped position in which it blocks the movement of the conveyor (4) and a released position in which it frees the movement of the conveyor (4);
- a manual safety actuator (38), capable of adopting an inactive position in which it commands the releasing of the brake (14) and an active position in which it allows the clamping thereof;
- a manual driving member (19) of the conveyor (4);
- a frame (27) housing the conveyor (4), this frame (27) comprising:
∘ a main door (31) for access to a main maintenance zone (29) in which the manual driving member (19) is located,
∘ a side door (32) for access to an ancillary maintenance zone (30) distinct from the main maintenance zone (29), this side door (32) being able to adopt a closed position in which it blocks access to the ancillary maintenance zone (30), and an open position in which it gives access to the ancillary maintenance zone (30),
∘ a lock (34) having a locked position in which it keeps the side door (32) in closed position, and an unlocked position in which it allows the side door (32) to be opened;
∘ a housing (35) designed to accommodate an lever (21) for actuating the manual driving member (19) ;
- a sensor (41) designed to detect the open or closed position of the main door (31);
- a sensor (42) designed to detect the open or closed position of the side door (32);
- a sensor (43) designed to detect the presence or absence of the actuation lever (21) in its housing (35) ;
- a control unit (18) linked to the motorization (10), to the lock (34), to the sensors (41, 42, 43), and to a control circuit (15) of the brake (14),
this method comprising the following operations, controlled by the control unit (18) as long as the main door (31) is detected to be open, the manual safety actuator (38) is active and the actuation lever (21) is detected to be absent from its housing (35):
- as long as the side door (31) is detected to be closed:
∘ commanding the locking of the lock (34) of the side door (32);
∘ commanding the brake (14) to be kept in or switched to the released position;
- as long as the side door (32) is detected to be open:
∘ commanding the brake (14) to be kept in or switched to the clamped position.

10. Method according to Claim 9, **characterized in that**, the facility (1) being equipped with a fluidic control circuit (15) of the brake (14) comprising:
- a source (16) of fluid under pressure,
- an intake duct (17) linking the source (16) of fluid under pressure to the brake (14),
- a first solenoid valve (EV1) mounted on the intake duct (17), driven by the control unit (18),
- a second solenoid valve (EV2) mounted on the intake duct (17) downstream of the first solenoid valve (EV1) and driven by the manual safety actuator (38),
the method comprises the following operations, controlled by the control unit (18):
- in the inactive position of the manual safety actuator (38), commanding the closure of the second solenoid valve (EV2), or
- in the active position of the manual safety actuator (38), opening the second solenoid valve (EV2) .
